# EUROPEAN PATENT SPECIFICATION

(11) **EP 2 134 058 B1**
(45) Date of publication and mention of the grant of the patent: **21.11.2012**
(21) Application number: 08290550.6
(22) Date of filing: 12.06.2008
(51) Int. Cl.: H04L 29/06, H04L 12/56

(54) **Method for protecting a packet based network and border node protection system**
Verfahren zum Schützen eines Paket-basierten Netzwerks und Border-Node-Schutzsystem
Procédé de protection d'un réseau basé sur paquets et système de protection de noeuds de bordure

(43) Date of publication of application: 16.12.2009
(73) Proprietor: Alcatel Lucent, 75007 Paris (FR)
(72) Inventor: Wahl, Stefan, 71701 Schwieberdingern (DE)
(74) Representative: Wetzel, Emmanuelle

(56) References cited:
- WO-A-2007/095726
- FR-A- 2 865 595
- US-A1- 2007 041 528
- SENGAR H ET AL: "VoIP Intrusion Detection Through Interacting Protocol State Machines" DEPENDABLE SYSTEMS AND NETWORKS, 2006. DSN 2006. INTERNATIONAL CONFERE NCE ON PHILADELPHIA, PA, USA 25-28 JUNE 2006, PISCATAWAY, NJ, USA,IEEE, 25 June 2006 (2006-06-25), pages 393-402, XP010925326 ISBN: 978-0-7695-2607-2
- SVEN EHLERT ET AL: "Two layer Denial of Service prevention on SIP VoIP infrastructures" INTERNET CITATION, [Online] vol. 31, 1 March 2008 (2008-03-01), pages 2443-2456, XP007904932 ISSN: 0140-3664 Retrieved from the Internet: URL:http://dx.doi.org/10.1016/j.comcom.200 8.03.016>
- CHEN E Y: "Detecting DoS attacks on SIP systems" VOIP MANAGEMENT AND SECURITY, 2006. 1ST IEEE WORKSHOP ON APRIL 3, 2006, PISCATAWAY, NJ, USA,IEEE, 3 April 2006 (2006-04-03), pages 51-56, XP010919088 ISBN: 978-1-4244-0144-4
- NICCOLINI S ET AL: "SIP intrusion detection and prevention: recommendations and prototype implementation" VOIP MANAGEMENT AND SECURITY, 2006. 1ST IEEE WORKSHOP ON APRIL 3, 2006, PISCATAWAY, NJ, USA,IEEE, 3 April 2006 (2006-04-03), pages 45-50, XP010919087 ISBN: 978-1-4244-0144-4
- REYNOLDS B ET AL: "Secure IP Telephony using Multi-layered Protection" INTERNET CITATION, [Online] XP002303699 Retrieved from the Internet: URL:INTERNET SOCIETY, RESTON, VA, USA http://www.isoc.org/isoc/conference s/ndss/03/proceedings/papers/3.pdf> [retrieved on 2004-11-03]

## Description

### Background of the Invention

The invention relates to a method for protecting a packet-based network from attacks during signalling sessions, according to the preamble of claim 1. The method comprises the following processing steps: examining of session control messages, in particular on SIP messages, contained in a packet stream during the signalling session by a firewall and opening or closing firewall ports depending on opening and closing criteria; queuing of the session control messages in a session queuing unit, and processing of the session control messages in a session control message stack, in particular an SIP stack.

Attacks on packet-based networks such as a SIP/IMS/TISPAN (resp. NGN) core networks can occur on different layers (IP, transport, up to SIP application layer) or combinations of layers of a network protocol and the attack strategy can vary. Furthermore, some application layer (SIP layer) attacks are only visible by the SIP stack itself.

The SIP stacks in the border nodes of a core network are highly jeopardized and therefore need protection mechanism to achieve the requested high availability of the whole IMS/TISPAN system especially for well behaving users/devices.

There are protection solutions known which act on individual layers. Yet, the protection rules are semi-static or need to be managed.

Sengar H. et al. "VOIP intrusion detection through interacting protocol state machines" Proceedings of the 2006 International Conference on Dependable Systems and Networks discloses D1 (Sengar et al.) discloses a VoIP intrusion Detection System (vIDS), which utilizes interaction among different protocols, e.g. between SIP (call control) and RTP (media delivery). To realize said interaction synchronization messages are exchanged between different protocols (see D1 fig.2a) via communication channels between protocol entities. The communication channels function as FIFO queue, whereby each FIFO queue is associated with the communication channel between two protocol entities.

WO 2007/095726 discloses a security device for SIP communications which acts as a conventional Firewall, NAT (Network Address Translation) and PAT (Port Address Translation). The described security device includes a hardened SIP stack to scan for and detect malformed SIP messages to prevent malicious attacks and/or inadvertent erroneous messages from adversely impacting the operation of SIP services.

### Object of the Invention

It is therefore an object of the invention to provide a method for protecting a packet-based network against any kind of attacks whereby the protection rules can be adapted dynamically. It is also an object of the invention to suggest an architecture for a border node system and a packet based network for which attacks can be repelled effectively.

### Summary of the Invention

This object is achieved by a method according to claim 1, a border node protection system according to claim 5, a packet-based network according to claim 7 and a computer program according to claim 8.

The inventive method comprises at least one lower layer processing step which is configured and instructed by one or multiple higher layer processing steps with respect to a network protocol, in particular of the OSI model. During processing a feedback signal comprising signalling session behaviour data and/or session initiation rate (number of session setup requests per time frame) information of a client and/or a user is created. The feedback signal is sent from the session control message stack to the queuing unit and determines a serving priority, and/or the feedback signal is sent from the session control message stack to the firewall, and determines the opening and closing criteria of firewall ports.

By means of the feedback signal from the session control message stack to the session queuing unit the session control message stack assigns priority credentials for each session and/or user, which depend for example on the behaviour of the respective client or user (signalling session behaviour) and which are sent back to the session queuing unit. The priority credentials are then translated into a serving priority. Per default (i.e. if no negative feedback signal is created, a negative feedback signal containing information about a negative behaviour of a client/user) the serving priority of a request (=session control message which is sent from a client to a server, also called method) is set to the highest and the sessions are processed according to FCFS(=first come first serve)-principle.

By means of the feedback signal from the session control message stack to the firewall further sessions of a certain client or user can be blocked. The respective client or user can also be set on a (e.g. time limited) blacklist. The feedback to the firewall drops the messages at the entrance of the security architecture and helps to keep the processing load at the subsequent functional blocks low. Parallel to the advised blocking at the ingress the session control message stack has to terminate the session or all sessions of the user/client with the correspondence(s) or simply provides an indication to delete the session resp. all sessions of this client/user. Within the session queuing unit the session queues are being destroyed whereby the higher-layer client/user queue/state information may remain for a further time frame, to be able to perform blogging of any further activity if this user/client has unexpectedly conquered the firewall.

The information contained in the inventive feedback signals are derived in a processing step which performs higher layer processings than the feedback receiving step. Thus the inventive method allows generation or modification of protection rules by the session control message stack whereby the rules are loaded into and processed by the preceding protection modules, so that the session control message stack is patronized from the moment the first indication was identified.

Different session control messages of one session are processed by the next free, i.e. un-occupied, session control message stack whereby session state information is stored in a common session storage in order to access the stored session state information from different session control message stacks. The inventive method allows that messages belonging to the same session or dialog can be processed by the next free session control message stack and must not be aware of the process which had performed the previous message process. The session queuing unit must take care that not two or more messages of the same session are processed in parallel. The session queuing unit has access to the common session storage and provides the available session control message stack with the required session state information. The session queues are virtual queues, i.e. arbitrary storage areas which are connected by means of pointers. Therefore two pointers are transmitted to the session control message stacks - one which points to the beginning of the respective session control message and another one which points to the respective stored session state information.

In a preferred variant of the inventive method the opening and closing criteria of the firewall can also be determined through a feedback signal of the session queuing unit to the firewall.

It is advantageous if the method further comprising: performing a signalling pre-processing in a pre-processing unit, whereby the content of every session control message is normalized and/or uniformly grouped. Especially SIP messages contain some headers which are more important than others. According to the invention these important header are assigned to the first and defined lines. It is accepted that there may be blank lines or blank storage areas in case of a missing header. This advantageous variant of the inventive method enables access of an aligned session control message stack to have a direct access to the most important header without string search function. Therefore less CPU power and storage bandwidth is required.

It is preferred that during pre-processing multiple signalling dialects are translated into an univocal dialect, and/or signalling header sequences are sorted, and/or session control messages with wrong content or structure are marked for deleting or for performing statistic and preparing a firewall rule for session blocking.

It is also possible that during pre-processing multiple signalling dialects are translated into an internal optimized format, in particular into an XML-based format.

In order to further improve protection of the network the opening and closing criteria of the firewall may be determined through a feedback signal of the pre-processing unit to the firewall.

In a preferred variant of the inventive method a negative feedback signal from the session control message stack during queuing may either lead to a lower serving priority, a reduced queue length, in particular to a change of queue parameters, or to a closing of the queue entrance and/or even to a queue unloading for each individual session (session dropping).

Advantageously during queuing the feedback from the session control message stack defines a set of expected next session control messages according to the session state, which defines the acceptable next message types for this session. Therewith session queuing unit comprises an intelligent filter mechanism. During each session usually only one of the expected next requests (=message types in case of SIP messages) is inserted into the queue. The feedback of the session control message stack determines which message types are allowed to occur next and are processed next. Any recurrence of same message types is either dropped or this session queue gets a much lower serving priority.

It is preferred that a session initiation rate of the signalling sessions is limited per client and/or overall whereby exceeding of the limited session initiation rate stops instantiation of further session queues. The limitation of the session initiation rate can refer to the rate of a client, to the rate of a user (whereby one user can have several clients) as well as to an overall rate. If the session initiation rate of a special client or a user exceeds a pre-assigned limitation, no further queue is generated for the respective client or user. Otherwise, if the overall rate exceeds the overall limitation the denial of further queues takes place at random (RED/RIO).

The invention further relates to a border node protection system for protecting a packet-based network from attacks according to claim 5. The system comprises: a session control message stack, in particular a SIP stack, for processing the session control messages, in particular SIP messages, contained in a packet stream on an application layer; a session queuing unit for queuing up messages, a firewall, and a feedback link between the session control message stack and the firewall for sending feedback signals from the session control message stack to the firewall and/or a feedback link between the session control message stack and the session queuing unit for sending feedback signals from the session control message stack to the session queuing unit, whereby the firewall and/or the session queuing unit is controlled by the feedback signals of the session control message stack.

A preferred embodiment comprises a further feedback link between the session queuing unit and the firewall, for sending feedback signals from the session queuing unit to the firewall, whereby the firewall is controlled by the feedback signals of the session queuing unit. If the session queuing identifies a session or message rate which is too high, these messages can be dropped in the session queuing itself, but to reduce the unproductive processing load the session queuing can decide to close (temporarily) the correspondent IP port of the firewall and could open this port again to test the behaviour of the signalling session. This could also be done by reading out the drop counters of the firewall.

The inventive protection system comprises a multitude of parallel session control message stacks and a common session storage for storing session state information. The common session storage uses also a storage scratch pad. This allows the storage of the temporary state information during message processing. As soon as the stack has given a positive feedback at the end of the processing - means stack process was not freezed, dropped,... - the new generated state information can be expected to be correct. So that that the common session storage takes over the temporary values as validated values and removes all the other temporary values in the scratch storage.

A further preferred embodiment comprises a pre-processing unit for translating multiple dialects into a univocal dialect and/or for sorting signalling header sequences.

Preferably the inventive protection system further comprises a further feedback link between the pre-processing unit and the firewall, for sending feedback signals from the pre-processing unit to the firewall, whereby the firewall is controlled by the feedback of the pre-processing unit. A too high rate of malformed messages can trigger the firewall to dose the IP port which delivers these messages.

Another aspect of the invention is implemented in a packet-based network, comprising at least one border node protection system as described above.

Further the invention suggests a computer program product for performing a method as described above.

Further features and advantages of the invention are provided in the following description of exemplary embodiments of the invention, with reference to the figures of the drawing, which shows details that are significant in the context of the invention and in the claims. The individual characteristics can be implemented individually by themselves, or several of them can be implemented in any desired combination in a variant of the invention.

### Brief Description of the Drawings

- Fig. 1: shows processing steps of a method for protecting a packet-based network from attacks according to the invention, whereby processing steps are configured and instructed by higher layer processing steps.
- Fig. 2: shows a border node protection system with a multi-stage, multi-layer protection architecture according to the present invention.

### Detailed Description of Preferred Embodiments

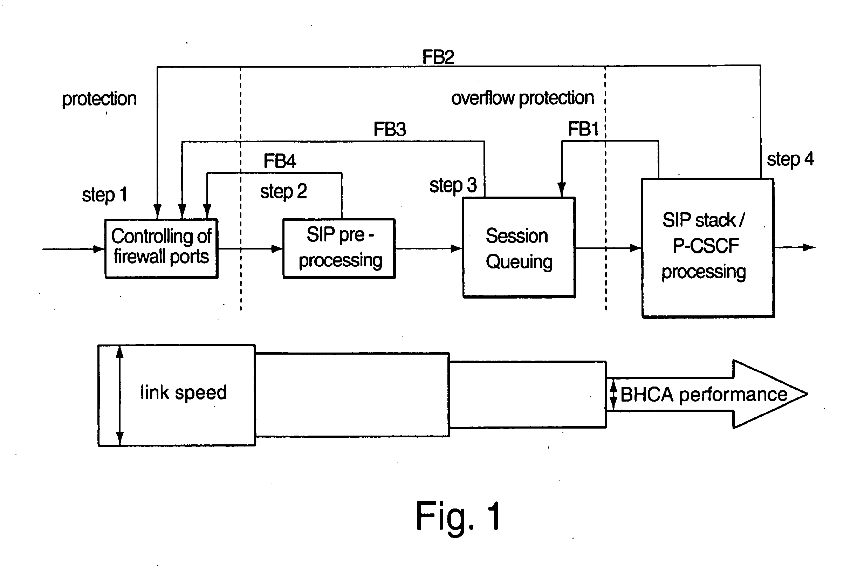

Fig. 1 shows processing steps of a preferred variant of the inventive method for a session initiation protocol (SIP), whereby the preceding processing steps are faster (higher link speed in fig. 1) than the following processing steps, but the preceding processing steps are configured and instructed by the following and higher layer processing steps. It should be mentioned that the invention is not restricted to SIP, but can comprise any other signalling protocol e.g. H.323.

Step 1 comprises a firewall process on layer 3 and 4 of the OSI model. Firewall ports are additionally controlled by feedback signals FB2 of a SIP stack. A temporary white and black list is generated which is controlled by a SIP stack process (step 4). The application of a feedback signal FB2 from the SIP stack can open or close firewall ports at the entrance, if e.g. a heavy traffic attack was identified.

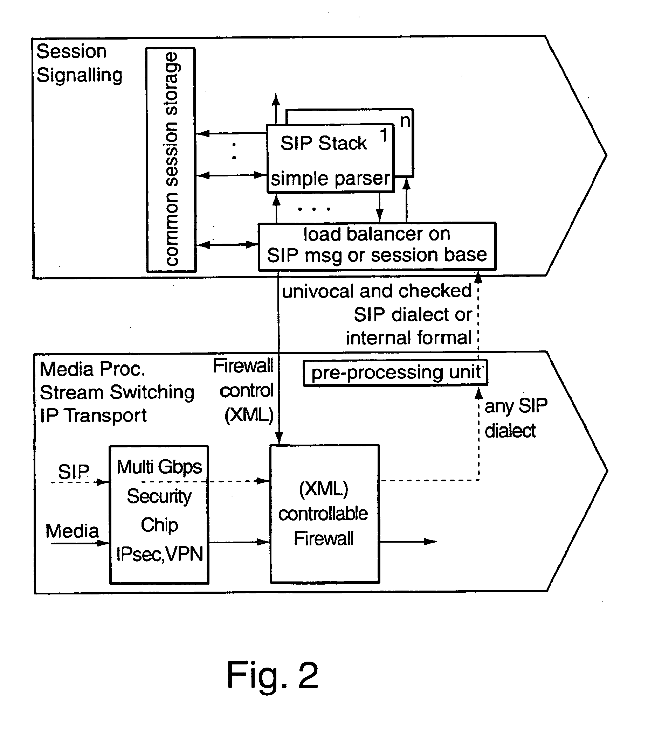

In step 2 an SIP pre-processing is performed. A pre-processing unit (fig. 2) processes every SIP/(SDP) message content so that the SIP stack software (step 4) can rely to get a conform, normalized and header sorted SIP message. Step 2 does not accomplish semantic processing. Its main use is to improve the throughput of the SIP stack parsing process.

Step 3 of the inventive method comprises a controlled session queuing for each session. A serving priority is determined for each session, which specifies the order in which processing of the different sessions is to occur. The serving priority can be adapted to signalling session behaviour of a client/device/user in the session history or the device/client history. Therefore, the SIP stack provides a feedback link to the session queuing unit. Each positive feedback signal FB1 increases the serving priority up to a maximum (=typical) level, this ensures that conform behaving users/devices get full and best performance. Negative feedback from the SIP stack may either lead to a lower serving priority a reduced queue length (change of queue - RED/RIO - parameters), or even a closing of the queue entrance. The session queues assigned to a single session are observing the message rates belonging to this session. The session queues can perform the above described activity for a single session. Nevertheless the client/user queue holds rate on a per client/user basis, which indicates whether the client/user overall is misbehaving. Depending on the case the restriction may disallow any new session setup or may punish all sessions of this user or device/client.

Another type of feedback signal FB1 from the SIP stack defines the set of SIP messages which are expected next according to the session state. This allows either filtering out unexpected messages and/or reducing the serving priority. This prevents the system from unproductive load which is produced by an erroneous SIP user agent device, for example if a device produces consecutively up to 10's of BYE messages.

The session initiation rate and herewith the dynamical (logical) session queue instantiation rate can be limited. In the session queuing every new session requires that a corresponding session queue is instantiated. Session queue instantiation rate is the maximum number of allowed new sessions per time frame, whereby, the time frame and the maximum number must be specified, because of the different integration intervals. If the session initiation rate is too high (dDoS(=distributed Denial of Service) attacks may bother the system), no further session queue for the respective session is instantiated and all messages concerning this session are dropped, thereby protecting the SIP stack from overload. Exceptions from this behaviour are made in case of SIP clients who have achieved a high reputation due to their positive feedbacks signal FB1. They can get extra session initiation rate contingent. Yet, if this additional contingent is exhausted, the SIP stack may decide to generate negative feedback which may either lead to a reduction of the serving priority or to a freezing of the session queue instantiation for this SIP client.

Step 4 comprises a semantic processing of the SIP stack on layer 7. Any kind of misbehaving of a SIP client is identified. Therefore, the SIP stack gets an interface to control the preceding modules (step 1 and 3) to filter out sources which massively misbehave - or on individual session level - to prioritize or penalize session messages. Penalized queues are only served by the SIP stack if the stack is in idle mode.

The inventive method allows removal of undesired or forbidden session control messages at a given session state.

Fig. 2 shows a border node protection system according to the invention comprising a firewall, a pre-processing unit and a SIP stack. SIP- and Media-messages pass a Multi Gbps security function or chip and are transmitted to the Layer 3/4 firewall. The firewall is controlled by feedback signals FB2 from a load balancer which acts as session queuing unit. The signalling messages which passed the firewall are transmitted to the pre-processing unit which translates any SIP dialect to a univocal and checked SIP dialect or to an internal format. The messages are than queued in the load balancer for filtering out messages of clients or users with a negative feedback signal FB1 from the SIP stack.

The inventive border node system further comprises a memory management instance (common session storage) that allocates session state memory in order to store the full session state information parallel to session message queue. This allows to apply (at step 4 of fig. 1) a multi server strategy whereby any SIP stack which has completed its current task gets a new message and further gets the related current states of this session to process. Furthermore, hanging or misbehaving SIP stack instantiations can be stopped and another SIP stack process can take over the task. At the end of an error-free task the SIP stack process stores all the state information into the session state memory.

In summary the inventive method for protecting a packet-based network from attacks, whereby at least one lower layer processing step is configured and instructed by one or multiple higher layer processing steps, comprises the following processing steps:
- examining of session control messages contained in a packet stream by a firewall and opening or closing firewall ports depending on opening and closing criteria;
- queuing of the session control messages in a session queuing unit,
- processing of the session control messages in a session control message stack, whereby during processing a feedback FB1, FB2 is created;

The feedback FB1 being sent from the session control message stack to the queuing unit and determining a serving priority, and/or the feedback FB2 being sent from the session control message stack to the firewall, and determining the opening and closing criteria of the firewall. Thereby the protection rules can be adapted dynamically and attacks can be repelled effectively.

## Claims

1. Method for protecting a packet-based network from attacks during signalling sessions, whereby at least one lower layer processing step is configured and instructed by one or multiple higher layer processing steps with respect to a network protocol,
the method comprising the following processing steps:
- examining of session control messages, in particular on SIP messages, contained in a packet stream during the signalling session by a firewall and opening or closing firewall ports depending on opening and closing criteria;
- queuing of the session control messages in a session queuing unit,
- processing of the session control messages in a session control message stack, in particular a SIP stack wherein a multitude of parallel session control message stacks is present, whereby during processing a feedback signal (FB1, FB2) is created, the feedback signal (FB1, FB2) comprising signalling session behaviour data and/or session initiation rate information of a client and/or session initiation rate information of a user,;
whereby the feedback signal is a first feedback signal (FB1) being sent from the session control message stack to the queuing unit and determining or allowing the queuing unit to determine a serving priority, and/or the feedback signal is a second feedback signal (FB2) being sent from the session control message stack to the firewall, and determining the opening and closing criteria of the firewall
**characterized in**
**that** different session control messages of one session are processed by the next free session control message stack whereby session state information is stored in a common session storage in order to allocate session state memory.

2. Method according to claim 1, **characterized in that** opening and closing criteria of the firewall are determined through a third feedback signal (FB3) of the session queuing unit to the firewall.

3. Method according to claim 1, the method further comprising:
performing a signalling pre-processing in a pre-processing unit, whereby the content of every session control message is normalized and/or uniformly grouped.

4. Method according to claim 1, **characterized in that** during queuing the first feedback signal (FB1) from the session control message stack defines a set of expected next session control messages according to the session state, which defines the acceptable next message types for this session or the forbidden next message types.

5. Border node protection system for protecting a packet-based network from attacks, comprising:
- a session control message stack, in particular an SIP stack, for processing the session control messages, in particular SIP messages, contained in a packet stream on an application layer;
- a session queuing unit for queuing up messages, and
- a firewall,
- a feedback link between the session control message stack and the firewall for sending second feedback signals (FB2) from the session control message stack to the firewall and/or a feedback link between the session control message stack and the session queuing unit for sending first feedback signals (FB1) from the session control message stack to the session queuing unit,
whereby the firewall is controlled by the second feedback signal (FB2) of the session control message stack, and/or the session queuing unit is controlled by the first feedback signal (FB1) of the session control message stack,
the system further comprising a multitude of parallel session control message stacks and a common session storage for storing session state information,
**characterized in that** different session control messages of one session are processed by the next free session control message stack, whereby session state information is stored in the common session storage in order to allocate session state memory.

6. Protection system according to claim 5, further comprising a further feedback link between the session queuing unit and the firewall, for sending third feedback signals (FB3) from the session queuing unit to the firewall, whereby the firewall is controlled by the third feedback signals (FB3) of the session queuing unit.

7. Packet-based network, comprising at least one border node protection system according to claim 5.

8. Computer program product for performing a method according to claim 1.

## Patentansprüche

1. Verfahren zum Schützen eines paketbasierten Netzwerks vor Angriffen während Signalisierungssitzungen, wobei mindestens ein Verarbeitungsschritt der niedrigeren Schicht von einem oder mehreren Verarbeitungsschritten der höheren Schicht in Bezug auf ein Netzwerkprotokoll konfiguriert und angewiesen wird, wobei das Verfahren die folgenden Verarbeitungsschritte umfasst:
- Prüfen von in einem Paketstrom enthaltenen Sitzungssteuerungsnachrichten, insbesondere SIP-Nachrichten, während der Signalisierungssitzung durch eine Firewall, und Öffnen oder Schließen von Firewall-Ports in Abhängigkeit von Öffnungs- oder Schtießkriterien:
- Einreihen der Sitzungssteuerungsnachrichten in eine Sitzungswarteschlangeeinheit;
- Verarbeiten der Sitzungssteuerungsnachrichten in einem Sitzungssteuerungsnachrichten-Stack, insbesondere einem SIP-Stack, wobei eine Vielzahl von parallelen Sitzungssteuerungsnachrichten-Stacks vorhanden ist, wobei während der Verarbeitung ein Rückkopplungssignal (FB1, FB2) erzeugt wird, wobei das Rückkopplungssignal (FB1, FB2) verhattensbezogene Signalisierungssitzungsdaten und/oder Sitzungsinitiationsrateninformationen eines Clients und/oder Sitzungsinitiationsrateninformationen eines Benutzers enthält;
wobei das Rückkopplungssignal ein von dem Sitzungssteuerungsnachrichten-Stack an die Warteschlangeneinheit gesendetes erstes Rückkopplungssignal (FB1) ist und eine Bedienungspriorität bestimmt oder die Warteschlangeneinheit befähigt, eine Bedienungspriorität zu bestimmen, und/oder das Rückkopplungssignal ein von dem Sitzungssteuerungsnachrichten-Stack an die Firewall gesendetes zweites Rückkopplungssignal ist und die Öffnungs- und Schließkriterien der Firewall bestimmt,
**dadurch gekennzeichnet, dass**
unterschiedliche Sitzungssteuerungsnachrichten einer Sitzung von dem nächsten freien Sitzungssteuerungsnachrichten-Stack verarbeitet werden, wobei die Sitzugszustandsinformationen in einem gemeinsamen Sitzungsspeicher gespeichert werden, um Sitzungszustandsspeicherplatz zuzuweisen.

2. Verfahren nach Anspruch 1, **dadurch gekennzeichnet, dass** Öffnungs- und Schließkriterien der Firewall durch ein drittes Rückkopplungssignal (FB3) der Sitzungswarteschlangeneinheit der Firewall bestimmt werden.

3. Verfahren nach Anspruch 1, wobei das Verfahren weiterhin umfasst:
Durchführen einer Signalisierungs-Vorverarbeitung in einer Vorverarbeitungseinheit,
wobei der Inhalt einer jeden Sitzungssteuerungsnachricht normalisiert und/oder gleichmäßig gruppiert wird,

4. Verfahren nach Anspruch 1, **dadurch gekennzeichnet, dass** während des Einreihens das erste Rückkopplungssignal (FB1) aus dem Sitzungssteuerungsnachrichten-Stack einen Satz von erwarteten nächsten Sitzungssteuerungsnachrichten gemäß dem Sitzungszustand definiert, welcher die zulässigen nächsten Nachrichtentypen für diese Sitzung oder die verbotenen nächsten Nachrichtentypen definiert.

5. Grenzknoten-Schutzsystem zum Schützen eines paketbasierten Netzwerks vor Angriffen, umfassend:
- Einen Sitzungssteuerungsnachrichten-Stack, insbesondere einen SIP-Stack, zur Verarbeitung der Sitzungssteuerungsnachrichten, insbesondere der SIP-Nachrichten, die in einem Paketstrom auf einer Anwendungsschicht enthalten sind;
- eine Sitzungswarteschlangeneinheit zum Einreihen von Nachrichten, und
- eine Firewall,
- eine Rückkopplungsverbindung zwischen dem Sitzungssteuerungsnachrichten-Stack und der Firewall zum Senden von zweiten Rückkopplungssignalen (FB2) von dem Sitzungssteuerungsnachrichten-Stack an die Firewall und/oder eine Rückkopplungsverbindung zwischen dem Sitzungssteuerungsnachrichten-Stack und der Sitzungswarteschlangeneinheit zum Senden von ersten Rückkopplungssignalen (FB1) von dem Sitzungssteuerungsnachrichten-Stack an die Sitzungswarteschlangeneinheit,
wobei die Firewall von dem zweiten Rückkopplungssignal (FB2) des Sitzungssteuerungsnachrichten-Stacks gesteuert wird und/oder die Sitzungswarteschlangeneinheit von dem ersten Rückkopplungssignal (FB1) des Sitzungssteuerungsnachrichten-Stacks gesteuert wird,
wobei das System weiterhin eine Vielzahl von parallelen Sitzungssteuerungsnachrichten-Stacks und einen gemeinsamen Sitzungsspeicher zum Speichen von Sitzungszustandinformationen umfasst, **dadurch gekennzeichnet, dass** unterschiedliche Sitzungssteuerungsnachrichten einer Setzung von dem nächsten freien Sitzungssteuerungsnachrichten-Stack verarbeitet werden, wobei die Sitzungszustandsinformationen in dem gemeinsamen Sitzungsspeicher gespeichert werden, um Sitzungszustandsspeicherplatz zuzuweisen.

6. Schutzsystem nach Anspruch 5, weiterhin umfassend eine weitere Rückkopplungsverbindung zwischen der Sitzungswarteschlangeneinheit und der Firewall zum Senden von dritten Rückkopplungssignalen (FB3) von der Sitzungswarteschlangeneinheit an die Firewall, wobei die Firewall von den dritten Rückkopplungssignalen (FB3) der Sitzungswarteschlangeneinheit gesteuert wird.

7. Paketbasiertes Netzwerk mit mindestens einem Grenzknoten-Schutzsystem gemäß Anspruch 5.

8. Computerprogramm-Produkt zum Durchführen eines Verfahrens gemäß Anspruch 1.

## Revendications

1. Procédé de protection d'un réseau en mode paquets contre des attaques durant des sessions de signalisation, au moins une étape de traitement de couche inférieure étant configurée et notifiée par une ou plusieurs étapes de traitement de couche supérieure par rapport à un protocole réseau,
le procédé comprenant les étapes de traitement suivantes :
- examen des messages de contrôle de session, en particulier des messages SIP, contenus dans un flux de paquets durant la session de signalisation par un pare-feu et des ports de pare-feu d'ouverture ou de fermeture selon des critères d'ouverture et de fermeture ;
- mise en file d'attente des messages de contrôle de session dans une unité de mise en file d'attente de sessions ;
- traitement des messages de contrôle de session dans une pile de messages de contrôle de session, en particulier une pile SIP, dans lequel une multitude de piles de messages de contrôle de session parallèles est présente, créant ainsi un signal de rétroaction (FB1, FB2) durant le traitement, le signal de rétroaction (FB1, FB2) comprenant des données de comportement de session de signalisation et/ou des informations de taux d'initiation de session d'informations de taux d'initiation de client et/ou de session d'un utilisateur ;
le signal de rétroaction étant un premier signal de rétroaction (FB1) envoyé depuis la pile de messages de contrôle de session vers l'unité de mise en file d'attente et déterminant ou permettant à l'unité de mise en file d'attente de déterminer une priorité de desserte, et/ou le signal de rétroaction est un deuxième signal de rétroaction (FB2) envoyé depuis la pile de messages de contrôle de session vers le pare-feu, et déterminant les critères d'ouverture et de fermeture du pare-feu,
**caractérisé en ce que**
les différentes messages de contrôle de session d'une session sont traités par la pile de messages de contrôle de session libre suivante, des informations d'état de session étant stockées dans un dispositif de stockage de session commun afin d'attribuer une mémoire d'état de sessions.

2. Procédé selon la revendication 1, **caractérisé en ce que** les critères d'ouverture et de fermeture du pare-feu sont déterminés par un troisième signal de rétroaction (FB3) de l'unité de mise en file d'attente de sessions vers le pare-feu.

3. Procédé selon la revendication 1, le procédé comprenant en outre :
l'exécution d'un pré-traitement de signalisation dans une unité de pré-traitement, le contenu de tous les messages de contrôle de session étant normalisé et/ou groupé uniformément.

4. Procédé selon la revendication 1, **caractérisé en ce que** durant la mise en file d'attente le premier signal de rétroaction (FB1) de la pile de messages de contrôle de session définit un ensemble de messages de contrôle de session prévus suivants en fonction de l'état de session, qui définit les types de messages acceptables suivants pour cette session ou les types de messages interdits suivants,

5. Système de protection de noeud de frontière pour protéger un réseau en mode paquets contre des attaques, comprenant :
- une pile de messages de contrôle de session, en particulier une pile SIP, pour traiter les messages de contrôle de session, en particulier les messages SIP, contenus dans un flux de paquets sur une couche d'application ;
- une unité de mise en file d'attente de sessions pour mettre en file d'attente des messages, et
- un pare-feu,
- une liaison de rétroaction entre la pile de messages de contrôle de session et le pare-feu pour envoyer des deuxièmes signaux de rétroaction (FB2) depuis la pile de messages de contrôle de session vers le pare-feu et/ou une liaison de rétroaction entre la pile de messages de contrôle de session et l'unité de mise en file d'attente de sessions pour envoyer des premiers signaux de rétroaction (FB1) depuis la pile de messages de contrôle de session vers l'unité de mise en file d'attente de sessions,
le pare-feu étant contrôlé par le deuxième signal de rétroaction (FB2) de la pile de messages de contrôle de session, et/ou l'unité de mise en file d'attente de sessions est contrôlée par le premier signal de rétroaction (FB1) de la pile de messages de contrôle de session,
le système comprenant en outre une multitude de piles de messages de contrôle de session parallèles et un dispositif de stockage de session commun pour stocker des informations d'état de session,
**caractérisé en ce que** différents messages de contrôle de session d'une session sont traités par la pile de messages de contrôle de session libre suivante, des informations d'état de session étant stockées dans le dispositif de stockage de session commun afin d'attribuer une mémoire d'état de session.

6. Système de protection selon la revendication 5, comprenant en outre une autre liaison de rétroaction entre l'unité de mise en file d'attente de sessions et le pare-feu, pour envoyer des troisièmes signaux de rétroaction (FB3) depuis l'unité de mise en file d'attente de sessions vers le pare-feu, le pare-feu étant contrôlé par les troisièmes signaux de rétroaction (FB3) de l'unité de mise en file d'attente de sessions.

7. Réseau en mode paquets, comprenant au moins un système de protection de noeud de frontière selon la revendication 5.

8. Produit de programme informatique pour exécuter un procédé selon la revendication 1.
